# EUROPEAN PATENT APPLICATION

(11) **EP 3 412 546 A1**
(43) Date of publication of application: **12.12.2018**
(21) Application number: 18176610.6
(22) Date of filing: 07.06.2018
(51) Int. Cl.: B62J 17/06, A45F 4/12, A41D 3/06, B62J 1/18, B62J 1/28, A41D 13/06, A41D 1/084

(54) **MULTIFUNCTIONAL PROTECTIVE ARTICLE**

(30) Priority: 08.06.2017 NL 2019032
(71) Applicant: Burki Innovations B.V., 3053 WB Rotterdam (NL)
(72) Inventor: Burki, Harmen Alexander, 3053 WB Rotterdam (NL)
(74) Representative: van Dokkum, Willem Gerard Theodoor

(57) **Abstract**

Protective article, which in unfolded position is arranged for use as rain protective garment and which in folded-up position is arranged for used as a saddle cover. The protective article 10 comprises a left leg cover 1 and a right leg cover 11, wherein the leg covers 1, 11 are parallel aligned with each other in the length direction L, and wherein the waist zone 6 of the left leg cover 1 and the waist zone 16 of the right leg cover 11 are connected to each other, respectively with the right length side 3 and the left length side 12 to form a one-piece article-waist zone in the width direction B. The saddle cover is formed by a roll 31 of rolled-up/folded-up waist zones 6, 16 with the knee zones 8, 18.

## Description

The invention relates to a multifunctional protective article that in unfolded position is arranged for use as a rain protective garment and that in folded-up position is arranged for use as a saddle cover.

Traditional rain wear, as it is often used during outdoor activities, among which are biking, horseback riding and hiking, includes rain clothing consisting of a (short) rain jacket and rain pants. Also, one-piece garments like a (long) rain coat or a rain poncho are covered by the term rain wear. Rain wear is preferably manufactured from material that is either liquid-impermeable, liquid-tight and/or liquid-repellent. Because rain wear is often used in case of raining rainwater, often the terms water-impermeable, watertight and/or water-repellent are used as well. The essence of rain wear is that (rain)water is not able to penetrate through the layer of fabric so the garments underneath will not get wet and remain dry. For this reason, rain wear is mostly manufactured of plastics, processed or coated textile fabrics including oil wear. Oil wear is traditional weather resistant clothing based of (most often) cotton, that is made watertight with a mixture of cooked linseed oil, beeswax and turpentine. Today, usually vinyl or nylon combined with textile is used, wherein the different layers are laminated or molten together.

Hikers also have the option to use a rain screen or an umbrella, that needs to be handheld in such a way that the unfolded screen is between the body of the hiker and the downpouring raindrops. For bikers the use of an umbrella is less popular because steering with one hand and holding on to the umbrella is hard. The balance on the bike is kept by steering and the balance is constantly disturbed and needs to be restored due to the asymmetrical exercise of force on the pedals by the legs one at the time. Besides, the velocity of a bike is so high, that an open umbrella increases the air friction of the biker and will clearly perceptibly slow the bike down. An additional disadvantage of the use of an umbrella on the bike is that the legs of the biker move up and to the front due to the turning movement of the pedals, so the legs and upper legs of the biker stick out outside the screen of the umbrella and thus still will be reached by falling rain, so that the legs or the garments covering the legs, like trousers, undesirable will still get wet. For horse riding, the same applies. This is why most of the bikers use rain wear, like a rain suit or a rain poncho, during biking in the rain.

Rain suits also have some disadvantages. You always have to take a rain suit with you, even though the weather is sunny and dry when you start your biking trip. For this reason, your bike at least needs to have a bike bag, because a folded rain suit is too big to carry on your body in a comfortable way. When a day starts of sunny and dry, the biker often forgets to take the rain suit with them, so when it rains later that day, there is no rain suit at hand in order to prevent their clothes getting wet. It is quite hard to put on rain trousers, so often people start by wearing only the rain jacket when it rains. Only later, when the legs are notably uncomfortably wet, people put on their rain trousers in the pouring rain.

Therefore, there is a need for a multifunctional protective article against rain, which can be taken with you easily for outdoor activities, and that can be quickly put in order to protect mainly the legs against the rain.

From Dutch patent application 1022367 a protective article is known, that comprises a left leg cover and a right leg cover. Both covers are mainly rectangular with in the length direction a left length side and a right length side, and in the width direction a waist side and a knee side and, wherein each leg cover is provided with a waist zone, a middle zone and a knee zone and wherein the middle zone is positioned between the waist zone and the knee zone and wherein the leg covers are positioned parallel to each other in the length direction and wherein the waist zone of the left leg cover and the waist zone of the right leg cover are connected to each other, with respectively their right length side and their left length side to form in the width direction a combined article for the waist. This well-known protective article comprises leg covers that stick out, consisting of a semi-rigid material, that makes it difficult to take the article with you or to fold it underneath a bike saddle.

Therefore, the object of the invention is to provide a protective article, that ensures that the article can be attached to the (upper)legs quickly and easily and that the user - especially a biker - does not have to put on rain trousers, and where the protective article can easily be attached to a part of the bike, so the user always has the article at his disposal.

The invention provides for a protective article, of which the leg covers are manufactured from a flexible, foldable material and wherein at least the knee zone of a leg cover is provided with an elastic element.

By manufacturing the protective article from a flexible, foldable material and by adding an elastic element, the article can easily and quickly be attached to the upper legs of the biker. Also, it can easily be folded and attached as a saddle cover for a bike saddle.

In particular, the elastic element is provided close to the knee side and/or close to the left and right length sides of the leg cover. Due to these characteristics it is possible to use and position the protective article both as a saddle cover and as a rain protective wearable.

Preferably, the elastic element is placed in a funnel, that is formed of a flexible, foldable material close to the knee side and/or close to the left and right length sides of the leg cover. Because of this, the garment can easily be stretched both on the bike saddle and on the legs of the user.

In order to improve the stretching and clamping of the garment a preferred embodiment is provided with a tensioner. With this tensioner the elastic element can be tensed and get a higher tension, so the bike saddle and the legs can be stronger clamped.

Preferably, the knee zones are provided with a form, that corresponds to the form of the knee of the user, in particular the knee sides of the knee zones are provided with a mainly round form.

These measures have the advantage that the protective article can easily be attached to the knees of the user. Additionally, the protective article stays better in place and is better fixated on the clothes of the user.

For example, the knee zones are provided with knee connection straps, in particular the first two connection straps are connected respectively to the right length side of the left knee zone and the left length side of the right knee zone, and the two second connection straps are connected respectively to the left length side of the left knee zone, and the right length side of the right knee zone. By attaching the knee connection straps in this way the knee connection straps can be used both for connecting the leg covers to the legs and for the attachment of the garment to a bike saddle.

More in particular, the knee zones are provided one or more saddle straps, which in particular are formed from the first and second knee connection straps of the left and right knee zone. Due to this, a saddle strap can be positioned underneath the saddle in order to prevent undesired taking off or loosening of the protective article when in saddle cover position. Advantageously, one or more saddle straps can be formed from the knee connection straps, so no extra attachment means are necessary.

In the preferred embodiment the first and second knee connection straps of the left and right knee zones are provided with Velcro elements, more in particular the Velcro elements are provided with cooperating strips of Velcro and contra-Velcro. Due to the use of Velcro, the knee connection straps can be used for connecting the leg covers on the legs of the users as well can be used as saddle straps.

Preferably, the waist zones are provided with waist connection straps, in particular the waist connection straps are connected to the left length side of the left waist zone, and to the right length side of the right waist zone.
With these connection straps on the knee zone and on the waist zone, the protective article can easily and at low costs be connected to or put over the clothes of the user that need to be protected from the rain.

To provide for a compact protective article, that is suitable as a saddle cover according to the invention, the leg covers are folded on top of each other over the connected length sides of the waist zones, and wherein the waist zones that are on top of each other and/or the middle zones are folded and/or rolled up from the waist sides in the direction of the knee zones into a roll, which extends in the width direction, and wherein the roll is held together by means of the waist connection straps, wherein the knee zones together with the elastic elements and the saddle straps are arranged to stretch around the saddle of a bike.

In particular, the saddle cover is formed from the protective article by the roll of the folded or rolled up waist zones and/or middle zones by connecting the waist connection straps to the saddle, and wherein a knee zone is provided with an elastic elements, in such a way that the saddle cover is arranged to be mounted around the point of the saddle with the knee side and a saddle strap and to be stretched over the saddle in such a way that, when positioned in the use position as saddle cover of the protective article, the roll is positioned behind the saddle and is fixated under the saddle by the (spring)tension exerted by the elastic element and/or by one or more waist connection straps, mounted on and/or around the saddle pin.
In this way a protective article is obtained, that in folded/rolled up position can easily be brought with you as a saddle cover on a biking trip and can easily be unfolded into an easy and quickly to attach rain protective garment for mainly the underside of the clothes of the user.

The invention also relates to a method of folding up the protective article, from the unfolded position that is arranged for the use as rain protective garment, to the folded-up position which is arranged for use as a saddle cover, comprising of the following steps:
folding the right leg cover underneath the left leg cover;
forming of one or more saddle straps from the first or second knee connection straps of the left and right knee zones;
at least partly folding toward inwardly to each other in the width direction of the on top of each other lying right length side of the left waist zone with the left length side of the right waist zone, and of the on top of each other lying left length side of the left waist zone with the right length side of the right waist zone;
folding inwardly in the length direction in the direction of the middle zone of the waist sides lying on top of each other with a part of the left and right waist zones that are on top of each other;
rolling-up in the length direction of the waist zones and/or the middle zones that are on top of each other from the waist zones in the direction of the knee zones, wherein the rotation axis of the roll extends mainly in the width orientation.
Particularly, the method comprises the following steps:
attaching the protective article that has been formed into the saddle cover to the saddle and or the saddle pin by means of the waist connection straps;
stretching and tensioning of the protective article by means of the tensioner of an elastic element.

Hereafter, the invention will be discussed in more detail on the basis of some of the embodiments, referring to some figures.
- Figure 1: shows an embodiment of the protective article according to the current invention;
- Figure 2: shows the protective article of figure 2 with folded-up leg covers and inwardly folded waist zones;
- Figure 3: shows the protective article of figure 1 in folded-up position for the use as saddle cover.

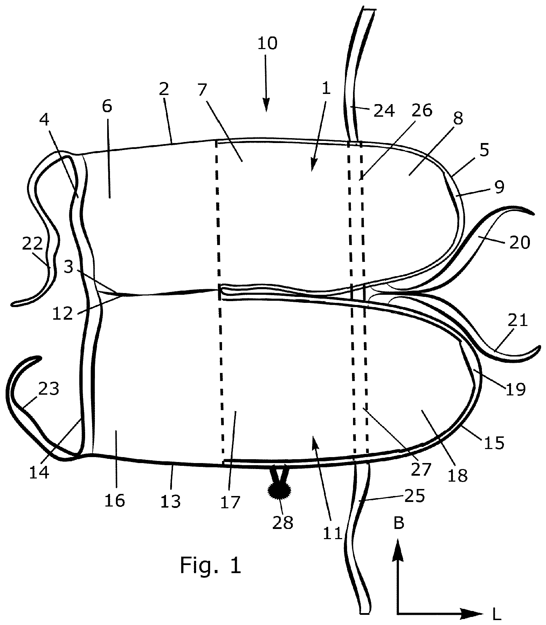

In Figure 1 the multifunctional protective article 10 is shown according to the invention, which is arranged to be used as a rain protective garment in unfolded position, and which in folded-up position is used as a saddle cover.

Figure 1 shows the protective article 10 in its unfolded position for use as a rain garment, especially as rain protector of the thighs/legs of a user like a biker. The protective article 10 of Figure 1 includes a left leg cover 1 and a right leg cover 11, wherein each leg cover 1, 11 is mainly rectangular. The leg covers 1, 11 are limited in the length direction by a left length side 2, 12 and by a right length side 3, 13. Both leg covers 1, 11 are limited in the width orientation by a waist side 4, 14 and a knee side 5, 15. Each leg cover 1, 11 from left to right in the length direction L contains a waist zone 6, 16, a middle zone 7, 17 and a knee zone 8, 18 wherein the middle zone 7, 17 is positioned between waist zone 6, 16 and the knee zone 8, 18.
Both leg covers 1, 11 are positioned parallel to each other in the length direction L. The waist-zone 6 from the left leg cover 1 and the waist zone 16 from the right leg cover 11 are connected to each other with the right length side 3 from the left waist zone 6 and with the left length side 12 from the right waist zone 16 to form in width direction B a combined continuous article waist zone. In use the protective article will be attached to the legs and especially to the thighs of a biker to protect against rain. To do so the left leg cover 1 will be put on the left (upper/thigh) leg of the user and the right leg cover 11 will be put on the right (upper/thigh) leg of the user.
The article waist zone with the connected waist zones 6, 16 is placed on the waist of the user. The waist zones 6, 16 are provided with waist connection straps 22, 23, which in Figure 1 are connected to the left length side 2 of the left waist zone 6 and to the right length side 13 of the right waist zone 16. By tying the waist connection straps 22, 23 behind the back of the user into each other (for example by Velcro) the upper side of the protective article is fixed onto the waist and upper legs of the user. Due to the fact that both leg covers 1, 11 are only connected to each other by the waist zones 6, 16 and the middle zones 7, 17, and the leg zones 8, 18 are not connected to each other, both leg covers can move with the (upper) legs of the user during biking movements independently of each other. The knee zones 8, 18 are provided with knee connection straps 21, 21, 24, 25. In Figure 1 the two first knee connection straps 20, 21 are connected to the right length side 3 of the left knee zone 8 and to the left length side 12 of the right knee zone 18, and wherein the two second knee connection straps 25, 26 are attached to the left length side 2 of the left knee zone 8 and to the right length side 13 of the right knee zone 18. By tying the knee connection straps 20, 21, 24, 25 to each other around the legs of the user the knee zones 8, 18 of the protective article is fixed onto the upper legs and the knees of the user. In order to closely abut the protective article to the legs or the leg garment of the user and thus preventing the leakage of (rain)water and getting the leg clothes wet, the knee zones 8, 18 are preferably provided with such a form, that corresponds to the form of the knee of the user. It appears that by providing the knee sides 5, 15, of the knee zones 8, 18, with a mainly round form provides for a close connection of the knee zones 8, 18 to the knees of the user. In a low cost embodiment form at least a knee zone 8, 18 has an elastic element 9, 19; in Figure 1 the elastic elements are provided close to the knee sides 5, 15 and/or close to the left and right length sides 2, 3, 12, 13 of the leg covers 1, 11. Because of this, the knee sides 5, 15 of the knee zones and/or the length sides 2, 3, 12, 13 of the middle zones 7, 17 more closely abut and clamp on the knees and the eventual leg clothing of the user. The elastic element 19 of the right leg cover 11 as shown in Figure 1 has a tensioner 28, with which the elastic element 19 can be tensioned. Preferably, the elastic element 9, 19 is provided in a funnel, nearby the knee sides 5, 15 of the knee zones and/or the length sides 2, 3, 12, 13 of the middle zones 7, 17. In order to be able to fold the protective article into a position and form, that is suitable for the use as saddle cover, the knee zones 8, 18 can be provided with one or more saddle straps 26, 27, that can be formed out of the knee connection straps 20, 21, 24, 25, especially Velcro elements are provided, preferably as Velcro strips. To tie the (including the rolled-up) parts of the protective article to the saddle, the waist connection straps 22, 23 are preferably provided with strips of Velcro.

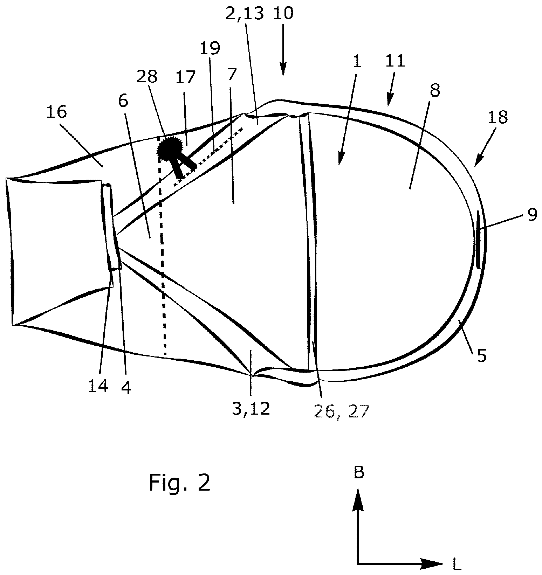

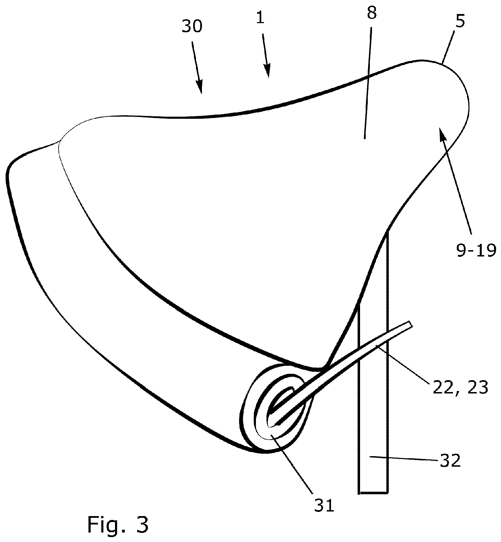

In Figure 2 the protective article is shown according to the invention in the transition phase between the unfolded position (Figure 1) as a rain protective garment and the folded-up position as a saddle cover (Figure 3). Figure 2 shows the protective article 10, wherein the left leg cover 11 is folded under the left leg cover 1, and in which the connected right length side 3 of the left waist zone 6 together with the left length side 12 of the right waist zone 16 in the length direction L forms a folding line. Furthermore the on top of each other positioned right length side 3 of the left waist zone 6 with the left length side 12 of the right waist zone 16 and the on top of each other positioned left length side 2 of the left waist zone 6 with the right length zone 13 of the right waist zone 16 are folded partly into each other toward the inside in the width direction B and after that, the on top of each other positioned waist sides 4, 14 with a part of the on top of each other positioned left and right waist zones 6, 16 in the length direction L are folded into the length direction L towards the inside in the direction of the middle zone 7. Now, it is possible to roll-up into the length direction L the on top of each other positioned waist zones 6, 16 and/or the middle zones 7, 17 from the waist zones 6, 16 in the direction of the knee zones 8, 18, wherein the rotation axis of the roll extends mainly in the width orientation B. The roll can be detachable connected to a saddle 30 and/or around the saddle pin 32 (see Figure 3) by means of the waist connection straps 22, 23 (see Figures 1 & 3), that for example can be manufactured as strips of Velcro. After folding, the knee connection straps 20, 21, 24, 25 are connected to each other and together they form saddle straps 26, 27, that can be attached under the saddle when attaching the saddle cover on the saddle. By means of the tensioner 28 of the elastic element 19 of the right leg cover 11 the saddle cover can be fitted closely around the saddle, by tensioning the elastic element.

In Figure 3 the protective article 10 is shown according to the invention in the folded-up (including the rolled-up) position for the use as a saddle cover. Figure 3 shows the roll 31, that contains the folded-up and/or rolled-up parts of the leg covers, in which the roll 31 is connected to the saddle 30 and/or the saddle pin 32, by means of waist connection straps 22, 23 and a compact protective article 1 has been created. The elastic elements 9, 19 ensure that the saddle 30 of the bike is advantageously elastically covered by the knee zones 8, 18 and/or the middle zones 7, 17. The saddle cover has been put over the point of the saddle with the knee side 5 and after that the saddle straps (not visible) are positioned under the saddle. Subsequently the saddle cover is stretched over the saddle 30 by positioning the roll 31 behind the saddle and fixating it to the saddle pin 32 or the saddle 30 by means of the waist connection straps 22, 23 and by the tensioning force exerted by the elastic element 9, 19, optionally amplified by the tensioner 28.

The protective article is preferably manufactured mainly of a flexible material, like an impregnated and/or coated, woven or non-woven (nonwoven, fleece , for example Tyvek ©), breathing and watertight PTFE foil (for example Gore-Tex), natural or artificial tissue material, canvas or plastic foil that is water proof, watertight, or water resistant.

## Claims

1. Protective article, which in unfolded position is used as rain protective garment and which in folded-up position is used as a saddle cover,
the protective article (10) comprises a left leg cover (1) and a right leg cover (11), in which every leg cover (1, 11) is mainly rectangular in shape with in the length direction (L) a left length side (2, 12) and a right length side (3, 13), and in the width direction (B) a waist side (4, 14) and a knee side (5, 15), and
wherein each leg cover (1, 11) is provided with a waist zone (6, 16), a middle zone (7, 17) and a knee zone (8, 18), and wherein the middle zone ((7, 17) is positioned between the waist zone (6, 16) and the knee zone (8, 18),
wherein the leg covers (1, 11) are parallel aligned with each other in the length direction (L), and
wherein the waist zone (6) of the left leg cover (1) and the waist zone (16) of the right leg cover (11) are connected to each other, respectively with the right length side (3) and the left length side (12) to form a one-piece article waist zone in the width direction (B),
**characterized, in that**
the leg covers (1, 11) are manufactured from a flexible, foldable material,
**and that** at least a knee zone (8, 18) of a leg cover (1, 11) is provided with an elastic element (9, 19).

2. Protective article according to claim 1, wherein the elastic element (9, 19) is provided close to the knee side (5, 15) and/or close to the left and right length side (2, 3, 12, 13) of the leg cover (1, 11).

3. Protective article according to claim 1 - 2, wherein the elastic element (9, 19) is fitted in a funnel, that is formed of a flexible, foldable material close to the knee side (5, 15) and/or close to the left and right length sides (2, 3, 12, 13) of the leg cover (1, 11).

4. Protective article according to claim 1 - 2, wherein the elastic element (9, 19) is provided with a tensioner (28).

5. Protective article according to one of the claims 1 - 4, wherein the knee zones (8, 18) are provided with a form, that corresponds to the form of the knee of the user.

6. Protective article according to one of the claims 1 - 5, in which the knee sides of the knee zones (8, 18) are provided with a mainly round form.

7. Protective article according to one of the preceding claims, in which the knee zones (8, 18) are provided with knee connection straps (20, 21, 24, 25), in particular the two first connection straps (20, 21) are connected respectively to the right length side (3) of the left knee zone (8) and the left length side (12) of the right knee zone (18), and the two second connection straps (25, 26) are connected respectively to the left length side (2) of the left knee zone (8), and the right length side (13) of the right knee zone (18).

8. Protective article according to claims 7, wherein the knee zones (8, 18) are provided with one or more saddle straps (26, 27), which in particular are formed from the first and second knee connection straps (20, 21, 24, 25) of the left and right knee zones (8, 18).

9. Protective article according to claim 8, wherein the first and second knee connection straps (20, 21, 24, 25) of the left and right knee zones (8, 18) are provided with Velcro elements, more in particular the Velcro elements are provided with cooperating strips of Velcro and contra-Velcro.

10. Protective article according to one of the preceding claims, wherein the waist zones (6, 16) are provided with waist connection straps (22, 23), in particular the waist connection straps (22, 23) are connected to the left length side (2) of the left waist zone (6), and to the right length side (13) of the right waist zone (16).

11. Protective article according to one of the preceding claims, wherein the leg covers (1, 11) are folded on top of each other over the connected length sides (3, 12) of the waist zones (6, 16), and wherein the on top of each positioned waist zones (6, 16) and/or the middle zones (7, 17) are folded and/or rolled up from the waist sides (4, 14) in the direction of the knee zones (8, 18) into a roll (31), which extends in the width direction (B), and wherein the roll (31) is held together by means of the waist connection straps (22, 23), in such a way that a compact protective article (1) is created, that is suitable for the use as a saddle cover because the knee zones (8, 18) together with the elastic element (9, 19) and the saddle straps (26, 27) are arranged to stretch around the saddle (30) of a bike.

12. Protective article according to claim 10, wherein the saddle cover is formed by the roll (31) of the folded/rolled up waist zones (8, 18) and/or middle zones (7, 17) by connecting the waist connection straps (22, 23) to the saddle (30) and or the saddle pin (32), and wherein the knee zones are provided with elastic elements (9, 19), in such a way that the saddle cover is arranged to be mounted around the point of the saddle (30) with the knee side (5) and the saddle straps (26, 27) and to be stretched over the saddle in such a way that, when positioned in the use position as saddle cover of the protective article, the roll (31) is positioned behind the saddle and is fixated under the saddle by the (spring)tension exerted by the elastic element (9, 19) and/or by one or more waist connection straps (22, 23), mounted on and/or around the saddle pin (32).

13. Method for the folding in of the protective article (10) according to one of the preceding claims, from the unfolded position which is arranged for the use as a rain protective garment, to the folded-up position which is arranged as a saddle cover, comprising the steps:
folding of the right leg cover (11) underneath the left leg cover (1);
forming of one or more saddle straps (26, 27) from the first and second knee connection straps (20, 21, 24, 25) of the left and right knee zones (8, 18);
at least partly folding into each other in the width direction (B) of the on top of each other positioned right length side (3) of the left waist zone (6) with the left length side (12) of the right waist zone (16), and of the on top of each other positioned left length side (2) of the left waist side (6) with the right left side (13) of the right waist zone (16).
folding inside in the length direction (L) in the direction of the middle zone (7) of the waist sides (4, 14) that are on top of each other, with a part of the left and right waist zones (6, 16), that are on top of each other;
rolling-up in the length direction (L) of the on top of each other positioned waist zones (6, 16) and/or middle zones (7, 17) from the waist zones (6, 16) in the direction of the knee zones (8, 18), wherein the rotation axis of the roll extends essentially in the width direction (B).

14. Method for folding-up of the protective article (10) according to claim 13, and furthermore comprising the steps:
connecting the protective article, that has been formed into the saddle cover, to the saddle and/or the saddle pin (32), by means of the waist connection straps (22, 23);
stretching and tensioning of the protective article by means of the tensioner (28) of an elastic element (9, 19).
